# EUROPÄISCHE PATENTSCHRIFT

(11) **EP 0 912 638 B1**
(45) Veröffentlichungstag und Bekanntmachung des Hinweises auf die Patenterteilung: **31.07.2002**
(21) Anmeldenummer: 97927058.4
(22) Anmeldetag: 28.05.1997
(51) Int. Cl.: C09B 67/40, C09D 11/00, B41M 5/035

(54) **FARBSTOFFZUBEREITUNGEN**
DYE PREPARATIONS
PREPARATIONS DE COLORANTS

(30) Priorität: 05.06.1996 DE 19622485; 18.11.1996 DE 19647600; 04.12.1996 DE 19650251
(43) Veröffentlichungstag der Anmeldung: 06.05.1999
(73) Patentinhaber: BASF AKTIENGESELLSCHAFT, 67056 Ludwigshafen (DE)
(72) Erfinder: SIEGEL, Bernd, D-67166 Otterstadt (DE); HALDER, Uwe, D-67454 Ha loch (DE); HERRMANN, Manfred, D-67061 Ludwigshafen (DE); LEITER, Herbert, D-67133 Maxdorf (DE)
(86) Internationale Anmeldenummer: EP9702759
(87) Internationale Veröffentlichungsnummer: WO9746623

(56) Entgegenhaltungen:
- EP-A- 0 083 553
- EP-A- 0 463 401
- EP-A- 0 655 527
- GB-A- 1 527 396
- DATABASE WPI Section Ch, Week 9344 Derwent Publications Ltd., London, GB; Class A23, AN 93-348635 XP002042564 & JP 05 255 626 A (KANEBO LTD) , 5.Oktober 1993
- CHEMICAL ABSTRACTS, vol. 106, no. 10, 9.März 1987 Columbus, Ohio, US; abstract no. 68897k, XP002042563 & JP 61 148 275 A (MITSUBISHI CHEMICAL INDUSTRIES CO.) 5.Juli 1986
- DATABASE WPI Section Ch, Week 8708 Derwent Publications Ltd., London, GB; Class A25, AN 87-054639 XP002042565 & JP 62 011 780 A (MITSUBISHI CHEM IND LTD) , 20.Januar 1987

## Beschreibung

Die vorliegende Erfindung betrifft neue Farbstoffzubereitungen, enthaltend, jeweils bezogen auf das Gewicht der Zubereitung, 0,1 bis 30 Gew.-% eines oder mehrerer Farbstoffe aus der Klasse der Anthrachinone oder Chinophthalone, die frei sind von ionischen Gruppen, 0,1 bis 20 Gew.-% eines Dispergiermittels auf Basis eines Arylsulfonsäure-Formaldehyd-Kondensationsprodukts und gegebenenfalls Wasser, sowie ihre Verwendung als Tinten im Ink-Jet-Verfahren sowie für den Sublimations-Transferdruck.

Aus der EP-A-655 527 und der GB-A 1 527 396 sind bereits Farbstoffzubereitungen, enthaltend Dispersionsfarbstoffe und spezielle Dispergiermittel, bekannt.

Aufgabe der vorliegenden Erfindung war es, neue Farbstoffzubereitungen, enthaltend Anthrachinon- oder Chinophthalonfarbstoffe, die frei sind von ionischen Gruppen, bereitzustellen. Die neuen Farbstoffzubereitungen sollten sich vorteilhaft für die Anwendung im Ink-Jet-Verfahren sowie beim Sublimations-Transferdruck eignen.

Demgemäß wurden die eingangs näher bezeichneten Farbstoffzubereitungen gefunden.

Geeignete Anthrachinonfarbstoffe, die frei von ionischen Gruppen sind, gehorchen z.B. der Formel I 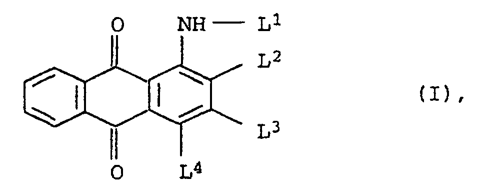 in der
- L¹: Wasserstoff, C₁-C₁₀-Alkyl oder gegebenenfalls durch C₁-C₄-Alkyl, C₁-C₄-Alkoxy, Halogen oder Nitro substituiertes Phenyl,
- L² und L³: unabhängig voneinander jeweils Wasserstoff, gegebenenfalls durch Phenyl oder C₁-C₄-Alkylphenyl substituiertes C₁-C₁₀-Alkoxy, gegebenenfalls durch Phenyl substituiertes C₁-C₁₀-Alkylthio, Halogen, Cyano, Hydroxyphenyl, C₁-C₄-Alkoxyphenyl, C₁-C₆-Alkanoyl, C₁-C₆-Alkoxycarbonyl oder einen Rest der Formel 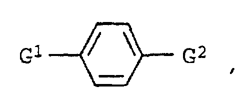 worin G¹ für Sauerstoff oder Schwefel und G² für Wasserstoff oder C₁-C₈-Monoalkylsulfamoyl, dessen Alkylkette durch 1 oder 2 Sauerstoffatome in Etherfunktion unterbrochen sein kann, stehen, und
- L⁴: gegebenenfalls durch C₁-C₄-Alkyl, Phenyl oder C₁-C₄-Alkylphenyl substituiertes Amino, Hydroxy oder gegebenenfalls durch Phenyl substituiertes C₁-C₁₀-Alkylthio bedeuten.

Geeignete Chinophthalonfarbstoffe, die frei von ionischen Gruppen sind, gehorchen z.B. der Formel II 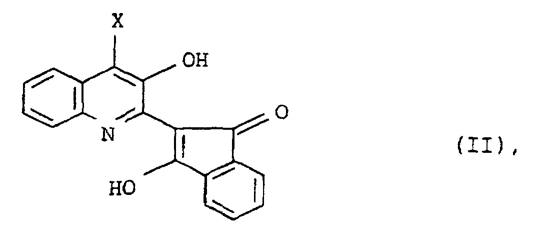 in der X Wasserstoff, Chlor oder Brom bedeutet.

Alle in der obengenannten Formel I auftretenden Alkylgruppen können sowohl geradkettig als auch verzweigt sein.

Wenn in der obengenannten Formel I substituierte Alkylgruppen auftreten, so weisen sie in der Regel 1 oder 2 Substituenten auf.

Wenn in den obengenannten Formeln substituierte Phenylgruppen auftreten, so weisen sie in der Regel 1 bis 3, vorzugsweise 1 oder 2, Substituenten auf.

Es folgt eine beispielhafte Aufzählung von Resten, wie sie in Formel I definiert sind.

Alkylreste sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5^{th} Edition, Vol. A 1, Seiten 290 bis 293, sowie Vol. A 10, Seiten 284 und 285).

Phenylreste sind z.B. Phenyl, 2-, 3- oder 4-Methylphenyl, 2-, 3-oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3- oder 4-Chlorphenyl, 2-, 3- oder 4-Bromphenyl oder 2-, 3- oder 4-Nitrophenyl.

Alkylthio- und Phenylthioreste sind z.B. Methylthio, Ethylthio, Propylthio, Isopropylthio, Butylthio, Isobutylthio, Pentylthio, Hexylthio, Heptylthio, Octylthio, Isooctylthio, 2-Ethylhexylthio, Nonylthio, Isononylthio, Decylthio, Isodecylthio, Benzylthio oder 1- oder 2-Phenylethylthio.

Alkoxyreste sind z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, 2-Methylpentyloxy, Heptyloxy, Octyloxy, Isooctyloxy, 2-Ethylhexyloxy, Nonyloxy, Isononyloxy, Decyloxy, Isodecyloxy, Benzyloxy oder 1- oder 2-Phenylethoxy.

Halogen ist z.B. Fluor, Chlor oder Brom.

Alkoxycarbonylreste sind z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl oder Hexyloxycarbonyl

Alkanoylreste sind z.B. Formyl, Acetyl, Propionyl, Butyryl, Pentanoyl oder Hexanoyl.

Sulfamoylreste sind z.B. Methylsulfamoyl, Ethylsulfamoyl, Propylsulfamoyl, Isopropylsulfamoyl, Butylsulfamoyl, Pentylsulfamoyl, Hexylsulfamoyl, Heptylsulfamoyl, Octylsulfamoyl, 2-Ethylsulfamoyl, 2-Methoxyethylsulfamoyl, 2-Ethoxyethylsulfamoyl, 3,6-Dioxaheptylsulfamoyl, 3,6-Dioxaoctylsulfamoyl, 4,8-Dioxanonylsulfamoyl, 3,7-Dioxaoctylsulfamoyl, 3,7-Dioxanonylsulfamoyl, 4,7-Dioxaoctylsulfamoyl, 4,7-Dioxanonylsulfamoyl oder 4,8-Dioxadecylsulfamoyl.

Bevorzugt sind Farbstoffzubereitungen, enthaltend einen oder mehrere Anthrachinonfarbstoffe der Formel I, in der L¹ Wasserstoff, C₁-C₄-Alkyl oder gegebenenfalls durch Methyl substituiertes Phenyl und L⁴ Hydroxy, Amino, C₁-C₄-Alkylamino, oder gegebenenfalls durch Methyl substituiertes Phenylamino bedeuten.

Weiterhin bevorzugt sind Farbstoffzubereitungen, enthaltend einen oder mehrere Anthrachinonfarbstoffe der Formel I, in der L² C₁-C₄-Alkoxy, Cyano, Acetyl, C₁-C₄-Alkoxycarbonyl oder einen Rest der Formel 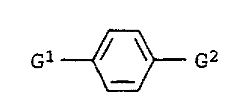 bedeutet, worin G¹ und G² jeweils die obengenannte Bedeutung besitzen, dabei steht G¹ insbesondere für Sauerstoff und G² insbesondere für Wasserstoff.

Weiterhin bevorzugt sind Farbstoffzubereitungen, enthaltend einen oder mehrere Anthrachinonfarbstoffe der Formel I, in der L³ Wasserstoff bedeutet.

Weiterhin bevorzugt sind Farbstoffzubereitungen, enthaltend den Chinophthalonfarbstoff der Formel IIa

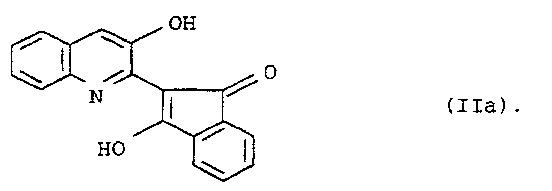

Bei den Farbstoffen der Formel I und II handelt es sich im allgemeinen um bekannte Farbstoffe. Die Anthrachinonfarbstoffe der Formel I sind beispielsweise in K. Venkataraman "The Chemistry of Synthetic Dyes", Vol. III, Seiten 391 bis 413, Academic Press, New York, London, 1970, beschrieben. Die Chinophthalonfarbstoffe der Formel II sind z.B. in der EP-A-83 553 oder der dort zitierten Literatur beschrieben.

Bevorzugt sind Farbstoffzubereitungen, in denen 99 % der in der Zubereitung enthaltenen Farbstoffteilchen kleiner sind als 1 µm.

Weiterhin bevorzugt sind Farbstoffzubereitungen, die solche Farbstoffe aus der Anthrachinon- oder Chinophthalonreihe enthalten, deren Sublimationstemperatur 140 bis 300°C beträgt.

Vorzugsweise verwendet man als Dispergiermittel ein Arylsulfonsäure-Formaldehyd-Kondensationsprodukt, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist.

Als Arylsulfonsäure-Formaldehyd-Kondensate werden vor allem solche mit einem maximalen Gehalt an Sulfonsäuregruppen von 40 Gew.-% verwendet.

Als Ausgangsprodukt für die Arylsulfonsäuren kommt insbesondere ein Gemisch solcher aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Cracken von Leichtbenzin an. Sie werden z.B. in der DE-A-2 947 005 als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30-55 |
| 2-Methylnaphthalin | 5-15 |
| 1-Methylnaphthalin | 4-10 |
| Inden | 3-10 |
| Diphenyl | 1- 5 |
| Methylinden | 1- 5 |
| Acenaphthen | 1- 4 |

Die Aromatenfraktion enthält außerdem an identifizierten Bestandteilen in Mengen von 0,1 bis etwa 2 Gew.% folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acenaphthylen und Toluol.

Besonders geeignete Arylsulfonsäuren enthalten in der Regel α-und β-Naphthalinsulfonsäuren, wobei das Verhältnis der α- zu den β-Isomeren 20:1 bis 1:8, insbesondere 10:1 bis 1:5 beträgt.

Geeignete aromatische Carbonsäuren oder deren Derivate sind beispielsweise Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride, wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure, oder synthetisch hergestellte Carbonsäuren wie 2-Ethylhexansäure, Isononansäure oder Isotridecansäure.

Weiterhin sind auch Mischungen von Anhydriden, Mischungen von Carbonsäuren, Mischungen von Salzen der in Betracht kommenden Carbonsäuren sowie Mischungen von Carbonsäuren und Anhydriden von Interesse. Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen, wie Ethanolamin, Diethanolamin oder Triethanolamin, erhältlich sind.

Besonders bevorzugt werden Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure in den Dispergiermitteln verwendet.

In den erfindungsgemäßen Farbstoffzubereitungen kommen vorzugsweise solche Dispergiermittel zur Anwendung, die
A) 50 bis 97 Gew.-%, insbesondere 70 bis 95 Gew.-%, einer oder mehrerer Arylsulfonsäure-Formaldehyd-Kondensate und
B) 3 bis 50 Gew.-%, insbesondere 5 bis 30 Gew.-%, einer oder mehrerer aromatischen oder langkettigen aliphatischen Carbonsäuren, deren Salzen oder deren Anhydriden oder einer Mischung hieraus enthalten.

Bei den erfindungsgemäß als Dispergiermittel zur Anwendung gelangenden Arylsulfonsäure-Formaldehyd-Kondensationsprodukten handelt es sich um an sich bekannte Produkte. Sie sind z.B. in der US-A-5 186 846 beschrieben.

Bevorzugt sind Farbstoffzubereitungen, die jeweils bezogen auf das Gewicht der Zubereitung 1 bis 15 Gew.-% eines oder mehrerer Farbstoffe aus der Klasse der Anthrachinone oder Chinophthalone, 0,5 bis 10 Gew.-% eines Dispergiermittels auf Basis eines Arylsulfonsäure-Formaldehyd-Kondensationsprodukts und gegebenenfalls Wasser enthalten.

Weiterhin bevorzugt sind Farbstoffzubereitungen, die zusätzlich, jeweils bezogen auf das Gewicht der Zubereitung, 0,1 bis 30 Gew.-%, vorzugsweise 0,1 bis 25 Gew.-%, eines Kohlenhydrats und 0,1 bis 20 Gew.-%, vorzugsweise 0,1 bis 15 Gew.-%, eines Polyethylenglykols enthalten.

Geeignete Kohlenhydrate, die in den erfindungsgemäßen Farbstoffzubereitungen enthalten sein können, sind z.B. Sorbit oder Glucose.

Geeignete Polyethylenglykole, die in den erfindungsgemäßen Farbstoffzubereitungen enthalten sein können, weisen beispielsweise ein mittleres Molekulargewicht von 100 bis 1000, vorzugsweise ca. 400 auf.

Weitere Bestandteile der erfindungsgemäßen Farbstoffzubereitungen können z.B. Hilfsmittel, wie Konservierungsmittel, Antioxidantien, Schaumverhinderungsmittel oder Mittel zur Regulierung der Viskosität sein. Diese Mittel sind an sich bekannt und handelsüblich. Wenn diese Mittel in den erfindungsgemäßen Farbstoffzubereitungen zugegen sind, beträgt ihre Gesamtmenge in der Regel 1 Gew.-% oder weniger, bezogen auf das Gewicht der Zubereitung.

Sofern die Summe der Bestandteile der erfindungsgemäßen Farbstoffzubereitungen einen Wert ergibt, der kleiner als 100 Gew. -% ist, ist der restliche Bestandteil in der Regel Wasser.

Die erfindungsgemäßen Farbstoffzubereitungen weisen üblicherweise eine Viskosität von 1 bis 4 mm²/sec, vorzugsweise 2 bis 3,5 mm²/sec auf.

Die Oberflächenspannung der erfindungsgemäßen Farbstoffzubereitungen beträgt in der Regel 30 bis 70 mN/m, vorzugsweise 40 bis 60 mN/m.

Der pH-Wert der erfindungsgemäßen Farbstoffzubereitungen liegt im allgemeinen bei 5 bis 11, vorzugsweise 7 bis 10.

Die Herstellung der neuen Farbstoffzubereitungen erfolgt auf an sich bekanntem Weg. So kann man den Farbstoff, beispielsweise in Form eines Preßkuchens, zusammen mit dem Dispergiermittel und gegebenenfalls Polyethylenglykol in Gegenwart von Wasser mischen und in einer geeigneten Apparatur vordispergieren. Die resultierende Mischung kann dann in einer Mühle behandelt werden, um die gewünschte Größe der Farbstoffteilchen einzustellen. Schließlich kann man die Endeinstellung vornehmen, indem man noch entsprechende Mengen Wasser, gegebenenfalls Polyethylenglykol und/oder Kohlenhydrate und gegebenenfalls weitere Hilfsmittel zusetzt und nach dem Mischen mittels eines Siebs, vorzugsweise mit einer Porengröße von 1 µm, filtriert.

Die erfindungsgemäßen Farbstoffzubereitungen eignen sich in vorteilhafter Weise als Tinten im Ink-Jet-Verfahren sowie für den Sublimations-Transferdruck.

Beim Ink-Jet-Verfahren (Tintenstrahldruck-Verfahren) verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbstoffzubereitungen als Tinten für das Bubble-Jet-Verfahren oder für das Verfahren mittels eines piezoelektrischen Kristalls.

Geeignete Substrate für das Ink-Jet-Verfahren sind neben Papier auch die im folgenden aufgeführten Trägermaterialien.

Beim Sublimations-Transferdruck wird ein Muster zunächst auf einem Zwischenträger vorgebildet und anschließend durch Hitzeeinwirkung auf einen Träger übertragen. Der Farbstoff kann sowohl beim Transfer selbst als auch in einem anschließenden Fixier- und Nachbehandlungsprozeß fixiert werden. Dieses Verfahren ist allgemein bekannt und z.B. in Ullmann's Encyclopedia of Industrial Chemistry, 5th Edition, Band A26, Seiten 499 bis 501, beschrieben.

Geeignete Träger sind insbesondere textile Materialien, z.B. Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, Polyamid, Polyacrylnitril. Triacetat, Acetat, Polycarbonat, Polypropylen oder Polyvinylchlorid, Polyestermikrofasern oder auch mit Kunststoffen beschichtete Träger, wie Metallfolien, Glas oder Keramik.

Die erfindungsgemäßen Farbstoffzubereitungen eignen sich besonders gut für den Sublimations-Transferdruck, bei dem das Muster auf dem Zwischenträger mittels des Ink-Jet-Verfahrens erzeugt wird.

Die neuen Farbstoffzubereitungen zeichnen sich dadurch aus, daß sie beim Ink-Jet-Verfahren zu keiner Verstopfung der Düsen führen. Weiterhin erhält man bei ihrer Anwendung streifenfreie Drucke.

Die folgenden Beispiele sollen die Erfindung näher erläutern.

Folgende Farbstoffe kamen zur Anwendung: 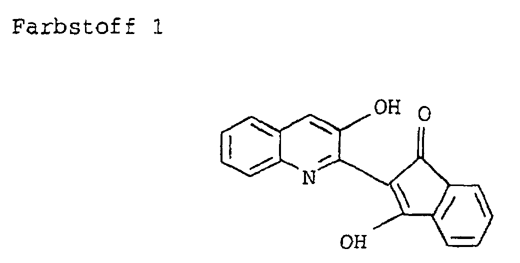 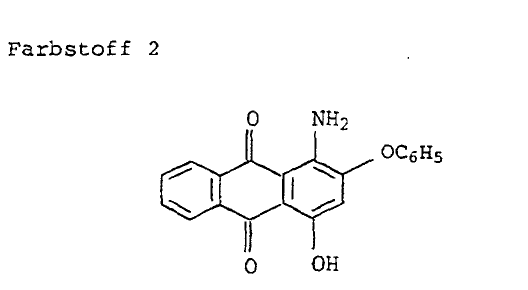 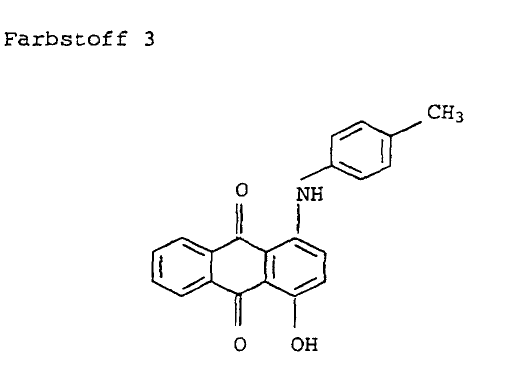 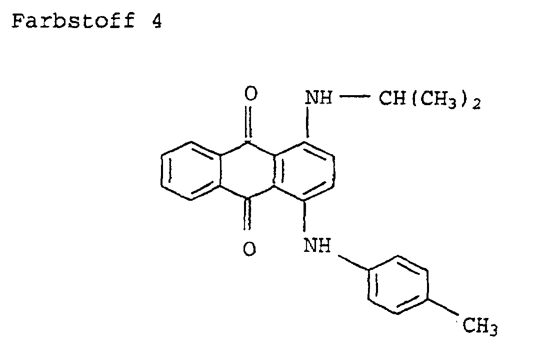
A) Herstellung der Farbstoffzubereitung
15 g Farbstoff, 15 g Polyethylenglykol (mittl. Molekulargewicht: 400), 7,5 g eines Dispergiermittels auf Basis eines Arylsulfonsäure-Formaldehyd-Kondensationsproduktes, das zusätzlich noch Benzoesäure enthält und in der US-A-5 186 846 als Dispergiermittel 3 beschrieben ist, 0,37 g 50 gew.-%ige wäßrige Lösung von Glutardialdehyd und 0,75 g 47 gew.-%ige wäßrige Lösung von Tetramethylolacetylendiharnstoff werden mit Wasser zum Gesamtgewicht von 100 g aufgefüllt und in einer Mühle angeteigt. Danach wird der pH-Wert mit 10 gew.-%iger Natronlauge auf 8,5 gestellt.
Anschließend wird die Mischung in einer Rührwerkskugelmühle gemahlen, so daß 99 % der Farbstoffteilchen eine Größe von kleiner 1 µm besitzen.
Zur Endeinstellung werden 26,7 g Mahlgut mit weiteren 4 g Polyethylenglykol (s.o.), 0,1 g 50 gew.-%ige wäßrige Lösung von Glutardialdehyd, 0,3 g 47 gew.-%ige wäßrige Lösung von Tetramethylolacetylendiharnstoff und 20 g 70 gew.-%iger wäßriger Sorbitlösung versetzt, mit Wasser bis zu einem Gesamtgewicht von 100 g aufgefüllt, gemischt und über ein Sieb mit einer Porengröße von 1 µm filtriert.
Man erhielt folgende Farbstoffzubereitungen. (Die Prozentangaben sind jeweils Gewichtsprozente.)

**Tabelle 1**

| | Zubereitung Nr. | | | |
|---|---|---|---|---|
| | 1 | 2 | 3 | 4 |
| Farbstoff Nr. 1 | 4 % | | | |
| Farbstoff Nr. 2 | | 4 % | | |
| Farbstoff Nr. 3 | | | 4 % | |
| Farbstoff Nr. 4 | | | | 4 % |
| Dispergiermittel | 2 % | 2 % | 2 % | 2 % |
| Polyethylenglykol | 8 % | 8 % | 8 % | 8 % |
| 70 %ige wäßrige Lösung von Sorbit | 20 % | 20 % | 20 % | 20 % |
| 50 %ige wäßrige Lösung von Glutardialdehyd | 0,5 % | 0,5 % | 0,5 % | 0,5 % |
| 4 %ige wäßrige Lösung von Tetramethylolacetylenharnstoff | 1,0 % | 1,0 % | 1,0 % | 1,0% |
| vollentsalztes Wasser | 64,5 % | 64,5 % | 64,5 % | 64,5 % |
| Gesamt | 100 % | 100 % | 100 % | 100 % |

B) Die Farbstoffzubereitungen weisen folgende physikalischen und drucktechnischen Eigenschaften auf.

**Tabelle 2**

| | Zubereitung Nr. | | | |
|---|---|---|---|---|
| | 1 | 2 | 3 | 4 |
| pH-Wert | 9,1 | 7,9 | 8,9 | 8,5 |
| Oberflächenspannung [mN/m] | 54,9 | 58,1 | 50,8 | 56,0 |
| Viskosität [mm²/sec] | 2,76 | 2,58 | 3,22 | 3,11 |
| Teilchengrößenverteilung [µm] X 50 | 0,32 | 0,33 | 0,46 | 0,42 |
| Teilchengrößenverteilung [µm] nach Alterung a) X 50 | 0,55 | 0,32 | 0,45 | 0,37 |
| Teilchengrößenverteilung [µm] nach Alterung b) X 50 | 0,35 | 0,36 | 0,48 | 0,35 |
| Tropfengewicht [ng] 10 Millionen Tropfen Minimum/Maximum | 94/101 | 93/110 | 85/95 | 80/105 |
| Dispersionsfaktor | 99,4 % | 100 % | 99,5 % | 99,2 % |

### Testmethoden und Bewertungen

1) Oberflächenspannung
   Die Oberflächenspannung wurde mit dem Digital-Tensiometer K 10 der Fa. Krüss bestimmt. Die in Tabelle 2 angegebenen Werte sind die Mittelwerte aus 3 Messungen.
2) Viskosität
   Die Viskosität wurde nach der Ubbelohde Methode (DIN 51662) bestimmt.
3) pH-Wert
   Der pH-Wert wurde mit pH-Meter 763 der Fa. Knick bestimmt.
4) Teilchengrößenbestimmung
   Die Teilchengrößenverteilung wurde mit einem CILAS Granulometer HR 850 der Fa. Alcatel gemessen.
5) Alterungsstabilität
   Die Alterungsstabilität der Zubereitungen (Tinten) wurde nach 2 Methoden untersucht:
   a) nach einem Wärmebelastungstest (Warmlagerung der Tinten für 3 Tage bei 60°C)
   b) nach einem Gefrier-/Wärmebehandlungszyklus (Einfrieren der Tinten für 4 h bei 20°C und anschließende Wärmebehandlung für 4 h bei 70°C). Dieser Temperaturzyklus wurde jeweils 4 mal durchlaufen.

   Nach beiden Alterungstests wurde die Teilchengrößenverteilung der belasteten Tinten mit der CILAS-Methode erneut ermittelt.
6) Kogationstest
   Von besonderer Wichtigkeit ist das Verhalten der Tinten während des Druckvorgangs in den Düsen. Die Neigung der Tinten Ablagerungen und Verstopfungen in den Düsen zu bilden, wurde mit nachstehendem Test überprüft. Als Testgerät wurden ein modifizierter Desk Jet Plus (Bubble Jet-Drucker) der Fa. Hewlett-Packard verwendet.
   Zunächst wurde das mittlere Tropfengewicht in Abhängigkeit der, an die Düsen angelegten Spannung ermittelt. Anschließend wurden bei konstanter Spannung 1 Million Impulse an jede Düse gegeben und danach erneut das mittlere Tropfengewicht einer definierten Tropfenanzahl bestimmt. Dieser Vorgang wurde insgesamt 10 mal wiederholt.
   Bei idealem Verhalten der Tinten sollte das mittlere Tropfengewicht über den Versuchszeitraum konstant bleiben.
   Die Veränderung des Tropfengewichtes der einzelnen Tinten ist in Tabelle 2 angeführt.
7) Disperionsfaktor
   100 ml der entsprechenden Tinte wurden für 7 Tage bei Raumtemperatur in einem Meßzylinder gelagert. Anschließend wurden 10 ml der Dispersion vom Boden und 10 ml von der Oberfläche entnommen und jeweils die Farbstärke photometrisch bestimmt.
   Der Dispersionsfaktor errechnet sich aus Farbstärke der oberen Dispersion/Farbstärke der unteren Dispersion x 100 = Dispersionsfaktor.
C) Herstellung von Ink-Jet-Drucken auf Papier
   Die Herstellung der Drucke erfolgte mit einem handelsüblichen Ink-Jet-Drucker der Firma Hewlett-Packard (HP 500) auf folgende handelsübliche Papiere:
   a) Intercopy Papier
   b) Claire Fontaine Papier
   c) Premium Glossy Papier der Firma Hewlett-Packard
   d) Ink-Jet Papier der Firma Zweckform
   e) Spezialbeschichtetes Papier der Firma Epson

   Außerdem wurden Druckversuche auf einem Papier vorgenommen, das wie folgt beschichtet wurde:
   Intercopy Papier wurde zunächst mit einer 10 gew.-%igen Lösung von Polyvinylalkohol, gelöst in einer Mischung aus Toluol/Methylethylketon/Cyclohexanon (20:45:20 v/v/v) mittels einer 12 µm-Rakel, anschließend mit einer 5 gew.-%igen Lösung von Ethylhydroxyethylcellulose in Toluol/Ethanol (8:2 v/v) ebenfalls mittels einer 12 µm-Rakel und schließlich mit einer 5 gew.-%igen wäßrigen Lösung von Carboxymethylcellulose mittels einer 24 µm-Rakel beschichtet.

Es wurden jeweils Drucke mit den Zubereitungen Nr. 1 bis 4, die vorher mit Wasser jeweils auf das doppelte Volumen verdünnt wurden, hergestellt. Nach 24 h Trocknungszeit weisen die so hergestellten Drucke gute Abriebfestigkeit, gute Wasserechtheit sowie gute Lichtechtheit auf.

Werden die Drucke zusätzlich getempert (30 sec bei 150°C) so wird eine deutliche Erhöhung der Farbstärke und der Brillanz beobachtet. Zudem erhöht sich die Abriebfestigkeit und die Lichtechtheit und man erhält eine egalere Färbung. Diese Beobachtungen sind auf den Papieren d) und e) besonders stark ausgeprägt.

## Patentansprüche

1. Farbstoffzubereitungen, enthaltend, jeweils bezogen auf das Gewicht der Zubereitung, 0,1 bis 30 Gew.-% eines oder mehrerer Farbstoffe aus der Klasse der Anthrachinone oder Chinophthalone, die frei sind von ionischen Gruppen, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist, und gegebenenfalls Wasser.

2. Farbstoffzubereitungen nach Anspruch 1, **dadurch gekennzeichnet, daß** sie, jeweils bezogen auf das Gewicht der Zubereitung 1 bis 15 Gew.-% eines oder mehrerer Farbstoffe aus der Klasse der Anthrachinone oder Chinophthalone, 0,5 bis 10 Gew.-% eines Dispergiermittels auf Basis eines Arylsulfonsäure-Formaldehyd-Kondensationsprodukts und gegebenenfalls Wasser enthalten.

3. Farbstoffzubereitungen nach Anspruch 1, **dadurch gekennzeichnet, daß** sie zusätzlich, jeweils bezogen auf das Gewicht der Zubereitung, 0,1 bis 30 Gew.-% eines Kohlenhydrats und 0,1 bis 20 Gew.-% eines Polyethylenglykols enthalten.

4. Farbstoffzubereitungen nach Anspruch 1, **dadurch gekennzeichnet, daß** 99 % der in der Zubereitung enthaltenen Farbstoffteilchen kleiner sind als 1 µm.

5. Farbstoffzubereitungen nach Anspruch 1, **dadurch gekennzeichnet, daß** sie Anthrachinonfarbstoffe der Formel I 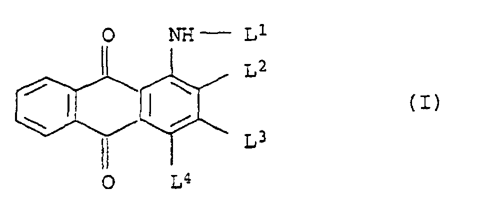 enthalten, in der
L¹ Wasserstoff, C₁-C₁₀-Alkyl oder gegebenenfalls durch C₁-C₄-Alkyl, C₁-C₄-Alkoxy, Halogen oder Nitro substituiertes Phenyl,
L² und L³ unabhängig voneinander jeweils Wasserstoff, gegebenenfalls durch Phenyl oder C₁-C₄-Alkylphenyl substituiertes C₁-C₁₀-Alkoxy, gegebenenfalls durch Phenyl substituiertes C₁-C₁₀-Alkylthio, Halogen, Cyano, Hydroxyphenyl, C₁-C₄-Alkoxyphenyl, C₁-C₆-Alkanoyl, C₁-C₆-Alkoxycarbonyl oder einen Rest der Formel 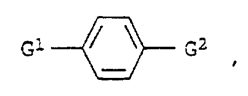 worin G¹ für Sauerstoff oder Schwefel und G² für Wasserstoff oder C₁-C₈-Monoalkylsulfamoyl, dessen Alkylkette durch 1 oder 2 Sauerstoffatome in Etherfunktion unterbrochen sein kann, stehen, und
L⁴ gegebenenfalls durch C₁-C₄-Alkyl, Phenyl oder C₁-C₄-Alkylphenyl substituiertes Amino, Hydroxy oder gegebenenfalls durch Phenyl substituiertes C₁-C₁₀-Alkylthio bedeuten.

6. Farbstoffzubereitungen nach Anspruch 1, **dadurch gekennzeichnet, daß** sie Chinophthalonfarbstoffe der Formel II 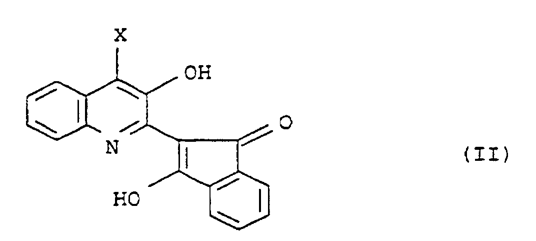 enthalten,
in der X Wasserstoff, Chlor oder Brom bedeutet.

7. Verwendung der Farbstoffzubereitungen gemäß Anspruch 1 als Tinten im Ink-Jet-Verfahren.

8. Verwendung der Farbstoffzubereitungen gemäß Anspruch 1 als Tinten im Sublimations-Transferdruck.

## Claims

1. Dye preparations comprising, based on the weight of the preparation, from 0.1 to 30% by weight of one or more dyes selected from the class of the anthraquinones or quinophthalones which are free of ionic groups, from 0.1 to 20% by weight of a dispersant based on an arylsulfonic acid-formaldehyde condensation product comprising from 3 to 50% by weight, based on the weight of the dispersant, of one or more aromatic or long-chain aliphatic carboxylic acids, their salts, their anhydrides or a mixture thereof and optionally water.

2. Dye preparations as claimed in claim 1, comprising, based on the weight of the preparation, from 1 to 15% by weight of one or more dyes selected from the class of the anthraquinones or quinophthalones, from 0.5 to 10% by weight of a dispersant based on an arylsulfonic acid-formaldehyde condensation product and optionally water.

3. Dye preparations as claimed in claim 1, further comprising, based on the weight of the preparation, from 0.1 to 30% by weight of a carbohydrate and from 0.1 to 20% by weight of a polyethylene glycol.

4. Dye preparations as claimed in claim 1, wherein 99% of the dye particles are smaller than 1 µm.

5. Dye preparations as claimed in claim 1, comprising anthraquinone dyes of the formula I 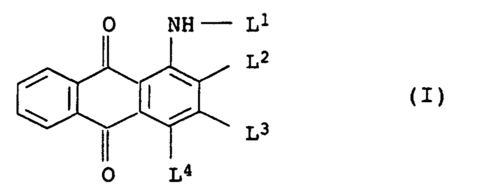 where
L¹ is hydrogen, C₁-C₁₀-alkyl or unsubstituted or C₁-C₄-alkyl-, C₁-C₄-alkoxy-, halogen- or nitro-substituted phenyl,
L² and L³ are independently of each other hydrogen, unsubstituted or phenyl- or C₁-C₄-alkylphenyl-substituted C₁-C₁₀-alkoxy, unsubstituted or phenyl-substituted C₁-C₁₀-alkylthio, halogen, cyano, hydroxyphenyl, C₁-C₄-alkoxyphenyl, C₁-C₆-alkanoyl, C₁-C₆-alkoxycarbonyl or a radical of the formula 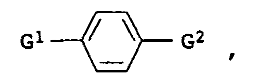 where G¹ is oxygen or sulfur and G² is hydrogen or mono-C₁-C₈-alkylsulfamoyl whose alkyl chain is with or without interruption by 1 or 2 oxygen atoms in ether function, and
L⁴ is unsubstituted or C₁-C₄-alkyl-, phenyl- or C₁-C₄-alkylphenyl-substituted amino, hydroxyl or unsubstituted or phenyl-substituted C₁-C₁₀-alkylthio.

6. Dye preparations as claimed in claim 1, comprising quinophthalone dyes of the formula II 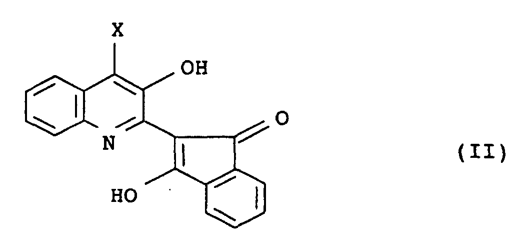 where
X is hydrogen, chlorine or bromine.

7. The use of the dye preparations of claim 1 as inks in the inkjet process.

8. The use of the dye preparations of claim 1 as inks in sublimation transfer printing.

## Revendications

1. Préparations de colorant contenant, à chaque fois par rapport au poids de la préparation, un ou plusieurs colorants provenant de la série des anthraquinones ou des quinophtalones, exempts de groupes ioniques, à raison de 0,1% à 30% en poids, un dispersant à base d'un produit de condensation d'acide arylsulfonique et de formaldéhyde qui comprend, à raison de 3% à 50% en poids, un ou plusieurs acides carboxyliques aliphatiques à chaîne longue ou bien aromatiques, leurs sels, leurs anhydrides ou leurs mélanges, à raison de 0,1% à 20% en poids, et éventuellement de l'eau.

2. Préparations de colorant selon la revendication 1, **caractérisées en ce qu'**elles contiennent, à chaque fois par rapport au poids de la préparation, un ou plusieurs colorants provenant de la série des anthraquinones ou des quinophtalones à raison de 1% à 15% en poids, un dispersant à base d'un produit de condensation d'acide arylsulfonique et de formaldéhyde, à raison de 0,5% à 10% en poids, et éventuellement de l'eau.

3. Préparations de colorant selon la revendication 1, **caractérisées en ce qu'**elles contiennent en plus, à chaque fois par rapport au poids de la préparation, un hydrocarbure à raison de 0,1% à 30% en poids et un polyéthylèneglycol à raison de 0,1% à 20% en poids.

4. Préparations de colorant selon la revendication 1, **caractérisées en ce que** 99% des particules de colorant, qui sont contenues dans la préparation, présentent une granulométrie inférieure à 1 µm.

5. Préparations de colorant selon la revendication 1, **caractérisées en ce qu'**elles comprennent des colorants d'anthraquinone de formule I 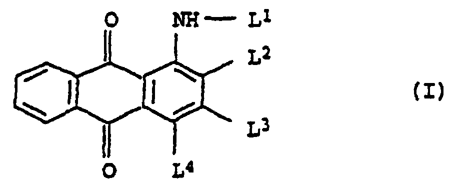 dans laquelle
L¹ représente un atome d'hydrogène, un groupe alkyle en C₁ à C₁₀ ou un groupe phényle qui est éventuellement substitué par un groupe alkyle en C₁ à C₄, alcoxy en C₁ à C₄, un atome d'halogène ou un groupe nitro,
L² et L³ représentent chacun, indépendamment l'un de l'autre, un atome d'hydrogène, un groupe alcoxy en C₁ à C₁₀ qui est éventuellement substitué par un groupe phényle ou (alkyle en C₁ à C₄)phényle, un groupe (alkyle en C₁ à C₁₀)thio qui est éventuellement substitué par un groupe phényle, ou bien ils représentent un atome d'halogène ou un groupe cyano, hydroxyphényle, (alcoxy en C₁ à C₄)phényle, alcanoyle en C₁ à C₆, (alcoxy en C₁ à C₆)carbonyle ou un reste de formule 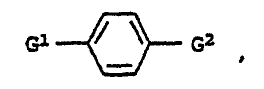 dans laquelle G¹ représente un atome d'oxygène ou de soufre et G² représente un atome d'hydrogène ou (monoalkyle en C₁ à C₈) sulfamoyle qui peut être interrompu, au niveau de sa chaîne alkyle, par 1 ou 2 atomes d'oxygène de fonctionnalité éther, et
L⁴ représente un groupe amino qui est éventuellement substitué par un groupe alkyle en C₁ à C₄, phényle ou (alkyle en C₁ à C₄)phényle, un groupe hydroxy ou un groupe (alkyle en C₁ à C₁₀)thio qui est éventuellement substitué par un groupe phényle.

6. Préparations de colorant selon la revendication 1, **caractérisées en ce qu'**elles comprennent des colorants de quinophtalone de formule II 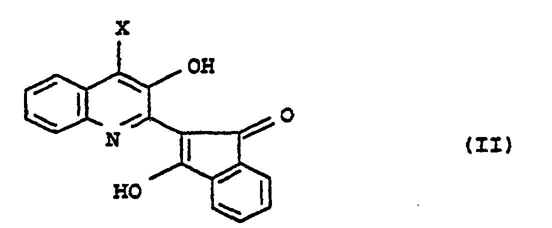 dans laquelle X représente un atome d'hydrogène de chlore ou de brome.

7. Mise en oeuvre des préparations de colorant selon la revendication 1, en tant qu'encre dans un procédé d'impression par jet d'encre.

8. Mise en oeuvre des préparations de colorant selon la revendication 1, en tant qu'encre pour l'impression à l'aide d'un transfert par sublimation.
